# EUROPEAN PATENT SPECIFICATION

(11) **EP 4 071 183 B1**
(45) Date of publication and mention of the grant of the patent: **12.11.2025**
(21) Application number: 20897006.1
(22) Date of filing: 03.12.2020
(51) Int. Cl.: C08F 20/10, C08L 33/04, C08F 220/18, C08L 33/08

(54) **ACRYLIC RUBBER, ACRYLIC RUBBER COMPOSITION AND CROSSLINKED PRODUCT OF SAME**
ACRYLKAUTSCHUK, ACRYLKAUTSCHUKZUSAMMENSETZUNG UND VERNETZTES PRODUKT DERSELBEN
CAOUTCHOUC ACRYLIQUE, COMPOSITION DE CAOUTCHOUC ACRYLIQUE ET PRODUIT RÉTICULÉ DE CELUI-CI

(30) Priority: 05.12.2019 JP 2019220359
(43) Date of publication of application: 12.10.2022
(73) Proprietor: Denka Company Limited, Tokyo 103-8338 (JP)
(72) Inventor: NAKANO, Tatsuya, Tokyo 103-8338 (JP); KAMBE, Yuya, Tokyo 103-8338 (JP); MIYAUCHI, Toshiaki, Tokyo 103-8338 (JP)
(74) Representative: Hoffmann Eitle
(86) International application number: PCT/JP2020/045078
(87) International publication number: WO 2021/112190

(56) References cited:
- EP-A1- 2 246 373
- WO-A1-2006/057445
- WO-A1-2009/099113
- WO-A1-2016/002936
- WO-A1-2019/188525
- WO-A1-2019/188527
- JP-A- 2008 214 418
- JP-A- H06 262 713

## Description

### Technical Field

The present invention relates to an acrylic rubber, an acrylic rubber composition, and a crosslinked product thereof.

### Background Art

Acrylic rubbers or crosslinked products thereof have been often used as materials for hose members, sealing members, and in an automobile engine compartment requiring heat resistance. As a means for improving the heat resistance of the acrylic rubber, a technique in which a specific carbon black is contained in an acrylic rubber composition (see, for example, Patent Literature 1) and a technique in which specific anti-aging agents are contained in combination in an acrylic rubber composition (see, for example, Patent Literature 2) have been known. Patent Literature 3 relates to an acrylic rubber obtainable by copolymerizing an alkyl acrylate with an alkyl methacrylate and a crosslinkable monomer; carbon black is envisaged as a bulking agent. Patent Literature 4 relates to an acrylic rubber composition containing a crosslinkable monomer unit and a methacrylic acid ester monomer unit selected from a methacrylic acid alkoxyalkyl ester monomer unit, a methacrylic acid polyalkylene glycol ester monomer unit, and a methacrylic acid alkoxypolyalkylene glycol ester monomer unit.

### Citation List

### Patent Literature

Patent Literature 1: International Publication WO 2008/143300
Patent Literature 2: Japanese Unexamined Patent Publication No. 2011-032390
Patent Literature 3: European Publication EP 2 246 373 A1
Patent Literature 4: International Publication WO 2019/188525 A1

### Summary of Invention

### Technical Problem

However, the acrylic rubbers are also required to have even more improved heat resistance to meet recent demands including gas emission controls, higher engine output.

An aspect of the present invention is made in view of such circumstances, and an object thereof is to provide an acrylic rubber having excellent heat resistance and a crosslinked product thereof.

### Solution to Problem

The present invention includes aspects described below.
[1] An acrylic rubber containing 100 parts by mass of an alkyl acrylate and 37 parts by mass or more of an alkyl methacrylate and 0.5 parts by mass or more of a crosslinking monomer having a carboxy group, as monomer units; wherein the alkyl methacrylate is n-butyl methacrylate; and wherein the alkyl acrylate is one or more selected from the group consisting of ethyl acrylate and n-butyl acrylate.
[2] The acrylic rubber according to [1], further containing ethylene as the monomer units.
[3] The acrylic rubber according to [1] or [2], wherein a content of the alkyl methacrylate is 37 parts by mass or more and 60 parts by mass or less.
[4] An acrylic rubber composition containing the acrylic rubber according to any one of [1] to [3].
[5] The acrylic rubber composition according to [4], further containing one or more selected from the group consisting of a crosslinking agent and a crosslinking accelerator.
[6] The acrylic rubber composition according to [4] or [5], further containing one or more selected from the group consisting of a filler, a reinforcing agent, a plasticizer, a lubricant, an anti-aging agent, a stabilizer, and a silane coupling agent.
[7] A crosslinked product of the acrylic rubber composition according to any one of [4] to [6].
[8] A hose member including the crosslinked product according to [7].
[9] A sealing member including the crosslinked product according to [7].
[10] A vibration-proof rubber member including the crosslinked product according to [7].

### Advantageous Effects of Invention

According to one aspect of the present invention, an acrylic rubber having excellent heat resistance and a crosslinked product thereof are provided.

### Description of Embodiments

Hereinafter, embodiments of the present invention will be described in detail, however, the present invention is not limited to each embodiment described below.

### (Acrylic rubber)

An acrylic rubber of the present embodiment contains 100 parts by mass of an alkyl acrylate and 37 parts by mass or more of an alkyl methacrylate, as monomer units.

The alkyl acrylate becomes the skeleton of the acrylic rubber, and heat resistance, cold resistance, and oil resistance of the acrylic rubber and a crosslinked product thereof can be adjusted by adjusting the content of the alkyl acrylate contained as the monomer units.

Examples of alkyl acrylates include alkyl acrylates having an alkyl group with 1 to 16 carbon atoms, and specific examples thereof include methyl acrylate, ethyl acrylate, n-propyl acrylate, isopropyl acrylate, n-butyl acrylate, isobutyl acrylate, n-pentyl acrylate, isoamyl acrylate, n-hexyl acrylate, 2-methyl pentyl acrylate, n-octyl acrylate, 2-ethylhexyl acrylate, lauryl acrylate, hexadecyl acrylate, 1-adamantyl acrylate, and cyclohexyl acrylate. These alkyl acrylates may be used singly or in combination of two or more, provided the alkyl acrylate is one or more selected from the group consisting of ethyl acrylate and n-butyl acrylate. From the viewpoint of further improving the heat resistance of the acrylic rubber and also improving oil resistance and cold resistance, the alkyl acrylate is one or more selected from the group consisting of ethyl acrylate and n-butyl acrylate.

The content of the monomer unit of the alkyl acrylate in the acrylic rubber (hereinafter, also referred to as the alkyl acrylate unit) is preferably 40% by mass or more, more preferably 45% by mass or more, and further preferably 50% by mass or more, with respect to the whole monomer units (100% by mass) constituting the acrylic rubber. The content of the alkyl acrylate unit is preferably 99% by mass or less, more preferably 95% by mass or less, and further preferably 90% by mass or less, with respect to the whole monomer units (100% by mass) constituting the acrylic rubber. The alkyl acrylate unit is quantitatively determined on the basis of a nuclear magnetic resonance spectrum obtained from the acrylic rubber or the acrylic rubber composition.

The acrylic rubber further contains an alkyl methacrylate as the monomer units. Examples include alkyl methacrylates having an alkyl group with 1 to 4 carbon atoms, and specific examples thereof include methyl methacrylate, ethyl methacrylate, n-propyl methacrylate, isopropyl methacrylate, n-butyl methacrylate, and isobutyl methacrylate. These alkyl methacrylates may be used singly or in combination of two or more, provided the alkyl methacrylate is n-butyl methacrylate. From the viewpoint of further improving the heat resistance of the acrylic rubber, the alkyl methacrylate is n-butyl methacrylate.

The content of the monomer unit of the alkyl methacrylate (hereinafter, also referred to as the alkyl methacrylate unit) in the acrylic rubber of the present embodiment is 37 parts by mass or more with respect to 100 parts by mass of the alkyl acrylate unit. Thereby, the heat resistance of the acrylic rubber and the crosslinked product thereof is improved. In particular, even after the acrylic rubber is exposed at a high temperature for a long time, high elongation at break can be maintained, and thus mechanical properties with respect to heat are improved. From the viewpoint of further improving heat resistance, the content of the alkyl methacrylate unit in the acrylic rubber is 37 parts by mass or more, particularly preferably 38 parts by mass or more, 40 parts by mass or more, 42 parts by mass or more, or 44 parts by mass or more, with respect to 100 parts by mass of the alkyl acrylate unit.

The content of the alkyl methacrylate unit in the acrylic rubber is preferably 60 parts by mass or less, more preferably 58 parts by mass or less, further preferably 55 parts by mass or less, and particularly preferably 50 parts by mass or less, with respect to 100 parts by mass of the alkyl acrylate unit. When the alkyl methacrylate unit with respect to the alkyl acrylate unit is in the above range, cold resistance and oil resistance of the acrylic rubber and the crosslinked product thereof can be maintained while heat resistance is further improved.

The content of the alkyl methacrylate unit in the acrylic rubber is preferably 37 to 60 parts by mass, more preferably 37 to 58 parts by mass, further preferably 37 to 55 parts by mass, and particularly preferably 37 to 50 parts by mass, with respect to 100 parts by mass of the alkyl acrylate unit. The content of the alkyl methacrylate unit in the acrylic rubber is quantitatively determined on the basis of a nuclear magnetic resonance spectrum obtained from the acrylic rubber or the acrylic rubber composition, similarly to the alkyl acrylate unit.

The acrylic rubber of the present embodiment further contains a crosslinking monomer as the monomer units. The crosslinking monomer refers to a monomer having a functional group that forms a crosslinking site (also called a crosslinking point). The crosslinking monomer is a monomer having a carboxy group. The carboxy group of the crosslinking monomer makes the intermolecular crosslinking of the acrylic rubber possible, and the hardness and the elongation at break of the acrylic rubber can be adjusted.

Examples of the crosslinking monomer having a carboxy group include acrylic acid, methacrylic acid, crotonic acid, 2-pentenoic acid, maleic acid, fumaric acid, itaconic acid, monoalkyl maleate, monoalkyl fumarate, monocyclohexyl maleate, monocyclohexyl fumarate, and cinnamic acid, but the crosslinking monomer is not limited thereto. The crosslinking monomer may be used singly or in combination of two or more.

From the viewpoint that monomers are easily subjected to a copolymerization reaction, and the heat resistance of the acrylic rubber and the crosslinked product thereof can be further improved, the crosslinking monomer is preferably monoalkyl maleate having an alkyl group with 1 to 8 carbon atoms or monoalkyl fumarate having an alkyl group with 1 to 8 carbon atoms and more preferably monobutyl maleate or monobutyl fumarate.

The content of the monomer unit of the crosslinking monomer (hereinafter, also referred to the crosslinking monomer unit) in the acrylic rubber is 0.5 parts by mass or more, with respect to 100 parts by mass of the alkyl acrylate unit. When the content of the crosslinking monomer unit is 0.1 parts by mass or more, a sufficient effect of crosslinking the acrylic rubber is attained, and the strength of the crosslinked product of the acrylic rubber is improved. The content of the crosslinking monomer unit is preferably 5 parts by mass or less, more preferably 4 parts by mass or less, and further preferably 3 parts by mass or less, with respect to 100 parts by mass of the alkyl acrylate unit. When the content of the crosslinking monomer unit is 5 parts by mass or less, the crosslinked product of the acrylic rubber is not cured too much, and the rubber elasticity of this crosslinked product can be stably maintained. For example, in a case where the crosslinking monomer is a crosslinking monomer having a carboxy group, the quantitative determination of the crosslinking monomer unit can be performed by dissolution of the acrylic rubber in toluene and neutralization titration of the solution with potassium hydroxide.

The acrylic rubber may contain ethylene as the monomer units. When the acrylic rubber contains a monomer unit of ethylene (hereinafter, also referred to as the ethylene unit), cold resistance and strength of the crosslinked product of the acrylic rubber are improved. Furthermore, when the acrylic rubber contains the ethylene unit, for example, in the case of using the crosslinked product of the acrylic rubber as a hose member, the appearance of this hose member becomes smooth, and the aesthetic appearance of the hose member is improved. The content of the ethylene unit in the acrylic rubber is preferably 0.1 parts by mass or more, more preferably 0.2 parts by mass or more, and further preferably 0.5 parts by mass or more, with respect to 100 parts by mass of the alkyl acrylate unit. The content of the ethylene unit is preferably 10 parts by mass or less, more preferably 8 parts by mass or less, and further preferably 5 parts by mass or less, with respect to 100 parts by mass of the alkyl acrylate unit. When the ethylene unit is in the above range, cold resistance and strength of the crosslinked product of the acrylic rubber is even more improved. The content of the ethylene unit in the acrylic rubber can be quantitatively determined on the basis of a nuclear magnetic resonance spectrum obtained from the acrylic rubber or the acrylic rubber composition.

The acrylic rubber may contain an additional monomer copolymerizable with the alkyl acrylate and the alkyl methacrylate, as the monomer units. Examples of the additional copolymerizable monomer include ethylenically unsaturated compounds other than the above-described monomers. Examples of the ethylenically unsaturated compounds include an alkoxy (meth)acrylate, an alkyl vinyl ketone, a vinyl or allyl ether, a vinyl aromatic compound, a vinyl nitrile, a dialkyl maleate, a dialkyl fumarate, a dialkyl itaconate, a dialkyl citraconate, a dialkyl mesaconate, a dialkyl 2-pentene diacid, and a dialkyl acetylenedicarboxylate. More specific examples of the compound include methoxyethyl acrylate, vinyl acetate, methyl vinyl ketone, vinyl ethyl ether, allyl methyl ether, styrene, α-methyl styrene, chlorostyrene, vinyl toluene, vinylnaphthalene, acrylonitrile, methacrylonitrile, acrylamide, propylene, butadiene, isoprene, pentadiene, vinyl chloride, vinylidene chloride, vinyl fluoride, vinylidene fluoride, vinyl propionate, dimethyl maleate, dimethyl fumarate, dimethyl itaconate, dimethyl citraconate, dimethyl mesaconate, dimethyl 2-pentene diacid, and dimethyl acetylenedicarboxylate.

The acrylic rubber of the present embodiment can be obtained by copolymerization of the above-described monomers by a known method such as emulsion polymerization, suspension polymerization, solution polymerization, or bulk polymerization.

### (Acrylic rubber composition and crosslinked product thereof)

The acrylic rubber composition of the present embodiment contains the above-described acrylic rubber. The acrylic rubber composition may contain, for example, a crosslinking agent, a crosslinking accelerator, and other additives described below. In this case, this acrylic rubber composition is kneaded at a temperature equal to or lower than a crosslinking temperature and then heated at a predetermined crosslinking temperature, so that a crosslinked product can be obtained. The acrylic rubber composition can be molded into desired various shapes and then crosslinked to obtain a crosslinked product, or can also be crosslinked to obtain a crosslinked product and then the crosslinked product can be molded into various shapes.

The heating conditions at the time of crosslinking can be appropriately set depending on the blending of the acrylic rubber composition or the type of the crosslinking agent, and may be, for example, 100 to 200°C for 1 to 10 hours. As a heating method, methods used in crosslinking of rubber such as hot press heating, steam heating, and oven heating can be used. Note that, the crosslinking agent and the crosslinking accelerator are also generally referred to as a vulcanizing agent and a vulcanization accelerator, respectively, but in the present specification, the crosslinking agent may be a compound containing sulfur or may be a compound not containing sulfur.

As an apparatus of kneading, molding, and crosslinking the acrylic rubber composition and an apparatus of kneading and molding the crosslinked product of the acrylic rubber composition, apparatuses used for general acrylic rubber compositions can be used. As the kneading apparatus, a roll, a kneader, a Banbury mixer, an internal mixer, and a twin-screw extruder can be used.

The crosslinking agent is not particularly limited as long as it is generally used in crosslinking of the acrylic rubber. In a case where the acrylic rubber contains a crosslinking monomer having a carboxy group as the monomer units, examples of the crosslinking agents include preferably a polyamine compound and a carbonate of a polyamine compound, and more preferably a polyamine compound having 4 to 30 carbon atoms and a carbonate thereof.

Specific examples of the polyamine compound include aromatic polyamine compounds such as 4,4'-bis(4-aminophenoxy)biphenyl, 4,4'-diaminodiphenyl sulfide, 1,3-bis(4-aminophenoxy)-2,2-dimethylpropane, 1,3-bis(4-aminophenoxy)benzene, 1,4-bis(4-aminophenoxy)benzene, 1,4-bis(4-aminophenoxy)pentane, 2,2-bis[4-(4-aminophenoxy)phenyl]propane, 2,2-bis[4-(4-aminophenoxy)phenyl]sulfone, 4,4'-diaminodiphenylsulfone, bis(4-3-aminophenoxy)phenylsulfone, 2,2-bis[4-(4-aminophenoxy)phenyl]hexafluoropropane, 3,4'-diaminodiphenyl ether, 4,4'-diaminodiphenyl ether, 4,4'-diaminobenzanilide, and bis[4-(4-aminophenoxy)phenyl]sulfone; and aliphatic polyamine compounds such as hexamethylendiamine, hexamethylendiamine carbamate, N,N'-dicinnamylidene-1,6-hexanediamine, diethylenetriamine, triethylenetetramine, and tetraethylenepentamine.

The content of the crosslinking agent in the acrylic rubber composition is preferably 0.1 parts by mass or more, more preferably 0.2 parts by mass or more, and further preferably 0.3 parts by mass or more, with respect to 100 parts by mass of the acrylic rubber. The content of the crosslinking agent is preferably 5 parts by mass or less, more preferably 4 parts by mass or less, and further preferably 3 parts by mass or less, with respect to 100 parts by mass of the acrylic rubber. When the content is within the above range, a sufficient crosslinking treatment may be performed.

The crosslinking accelerator is not particularly limited, but in a case where the crosslinking agent is a polyamine compound or a carbonate thereof, examples of the crosslinking accelerator include an aliphatic secondary monoamine compound, an aliphatic tertiary monoamine compound, a guanidine compound, an imidazole compound, a quaternary onium salt, a tertiary phosphine compound, an alkali metal salt of weak acid, and a diazabicycloalkene compound. The crosslinking accelerator can be used singly or in combination of two or more.

Examples of the aliphatic secondary monoamine compound include dimethylamine, diethylamine, di-n-propylamine, diallylamine, diisopropylamine, di-n-butylamine, di-t-butylamine, di-sec-butylamine, dihexylamine, diheptylamine, dioctylamine, dinonylamine, didecylamine, diundecylamine, didodecylamine, ditridecylamine, ditetradecylamine, dipentadecylamine, dicetylamine, di-2-ethylhexylamine, dioctadecylamine, di-cis-9-octadecenylamine, and dinonadecylamine.

Examples of the aliphatic tertiary monoamine compound include trimethylamine, triethylamine, tri-n-propylamine, triallylamine, triisopropylamine, tri-n-butylamine, tri-t-butylamine, tri-sec-butylamine, tripentylamine, trihexylamine, triheptylamine, trioctylamine, trinonylamine, tridecylamine, triundecylamine, tridodecylamine, tridecylamine, tritetradecylamine, tripentadecylamine, tricetylamine, tri-2-ethylhexylamine, trioctadecylamine, tri-cis-9-octadecenylamine, trinonadecylamine, N,N-dimethyldecylamine, N,N-dimethyldodecylamine, N,N-dimethyltetradecylamine, N,N-dimethylcetylamine, N,N-dimethyloctadecylamine, N,N-dimethylbehenylamine, N-methyldidecylamine, N-methyldidodecylamine, N-methylditetradecylamine, N-methyldicetylamine, N-methyldioctadecylamine, N-methyldibehenylamine, and dimethylcyclohexylamine.

Examples of the guanidine compound include 1,3-di-o-tolylguanidine and 1,3-diphenylguanidine.

Examples of the imidazole compound include 2-methylimidazole and 2-phenylimidazole.

The quaternary onium salt is not particularly limited, and examples thereof include ammonium salts such as tetra-n-butylammonium chloride, trimethylphenylammonium chloride, trimethylstearylammonium chloride, trimethyllaurylammonium chloride, trimethylcetylammonium chloride, dimethyldistearylammonium chloride, tributylbenzylammonium chloride, tetra-n-butylammonium bromide, methyltriphenylammonium bromide, ethyltriphenylammonium bromide, trimethylphenylammonium bromide, trimethylbenzylammonium bromide, trimethylstearylammonium bromide, and tetrabutylammonium thiocyanate, and phosphonium salts such as tetra-n-butylphosphonium chloride, tetra-n-butylphosphonium bromide, methyltriphenylphosphonium bromide, ethyltriphenylphosphonium bromide, butyltriphenylphosphonium bromide, hexyltriphenylphosphonium bromide, benzyltriphenylphosphonium bromide, tetraphenylphosphonium chloride, tetraphenylphosphonium bromide, 4-butoxybenzyltriphenylphosphonium bromide, allyltributylphosphonium chloride, 2-propynyltriphenylphosphonium bromide, and methoxypropyltributylphosphonium chloride.

Examples of the tertiary phosphine compound include triphenylphosphine and tri-p-tolylphosphine.

Examples of the alkali metal salt of weak acid include inorganic weak acid salts such as phosphates and carbonates of sodium and potassium, and organic weak acid salts such as stearates and laurates of sodium and potassium.

Examples of the diazabicycloalkene compound include 1,8-diazabicyclo[5.4.0]undecene-7 (DBU), 1,5-diazabicyclo[4.3.0]nonene-5 (DBN), and 1,4-diazabicyclo[2.2.2]octane (DABCO). These diazabicycloalkene compounds may form salts, for example, with hydrochloric acid, sulfuric acid, carboxylic acid, sulfonic acid, phenol. Examples of the carboxylic acid include octylic acid, oleic acid, formic acid, orthophthalic acid, and adipic acid. Examples of the sulfonic acid include benzenesulfonic acid, toluenesulfonic acid, dodecylbenzenesulfonic acid, and naphthalene sulfonic acid.

The crosslinking accelerator may contain a curing agent for epoxy resins, such as a pyrolytic ammonium salt, an organic acid, an acid anhydride, an amine, sulfur, and a sulfur compound, for adjusting the crosslinking speed.

The content of the crosslinking accelerator in the acrylic rubber composition is preferably 0.1 parts by mass or more, more preferably 0.2 parts by mass or more, and further preferably 0.3 parts by mass or more, with respect to 100 parts by mass of the acrylic rubber. Furthermore, the content of the crosslinking accelerator is preferably 5 parts by mass or less, more preferably 4 parts by mass or less, and further preferably 3 parts by mass or less, with respect to 100 parts by mass of the acrylic rubber. When the content is within the above range, a sufficient crosslinking treatment may be performed.

The acrylic rubber composition may contain additives such as a filler (a reinforcing agent), a plasticizer, a lubricant, an anti-aging agent, a stabilizer, and a silane coupling agent, depending on intended practical use.

The filler (the reinforcing agent) may be fillers (reinforcing agents) used in general acrylic rubbers, and examples thereof include fillers (reinforcing agents) such as carbon black, acetylene black, silica, clay, talc, calcium carbonate, antimony trioxide, and aluminum hydroxide.

The total content of these additives in the acrylic rubber composition is preferably 0.1 parts by mass or more and more preferably 0.2 parts by mass or more, with respect to 100 parts by mass of the acrylic rubber. The total content of the additives is preferably 90 parts by mass or less and more preferably 80 parts by mass or less, with respect to 100 parts by mass of the acrylic rubber.

The crosslinked product of the present embodiment is used as an industrial part, and is suitably used, particularly, as a hose member such as a rubber hose; a sealing member such as a gasket or a packing; a vibration-proof rubber member. That is, another embodiment of the present invention is a hose member, a sealing member, or a vibration-proof rubber member containing the above-described crosslinked product. These members may be formed from only the crosslinked product of the acrylic rubber composition, and may include this crosslinked product and other parts.

Examples of the hose member include transmission oil cooler hoses, engine oil cooler hoses, air duct hoses, turbo intercooler hoses, hot air hoses, radiator hoses, power steering hoses, fuel-line hoses, and drain-line hoses of automobiles, construction machines, hydraulic equipment. The hose member may have reinforcing filaments or wires on the intermediate layer or outermost layer of the hose.

Examples of the sealing member include engine head cover gaskets, oil pan gaskets, oil seals, lip seal packings, O-rings, transmission seal gaskets, crank shafts, cam shaft seal gaskets, valve stems, power steering seals, belt cover seals, constant-velocity-joint boot materials, and rack-and-pinion boot materials.

Examples of the vibration-proof rubber member include damper pulleys, center support cushions, and suspension bushings.

### Examples

Hereinafter, the present invention will be more specifically described based on Examples, however, the present invention is not limited by these Examples.

Six types of acrylic rubbers A to F were produced in the conditions shown below.

### <Acrylic rubber A>

In a pressure-resistant reaction container having an internal volume of 40 liters, 17 kg of 4% by mass aqueous solution of partially saponified polyvinyl alcohol and 56 g of sodium formaldehyde sulfoxylate were charged, and the whole was thoroughly mixed with a stirrer in advance, thereby preparing a homogeneous suspension. The air in the upper part of the container was replaced with nitrogen, then 0.9 kg of ethylene was injected under pressure into the upper part of the container, and the pressure was adjusted at 3.5 MPa. Under stirring, the temperature in the container was maintained at 55°C, and 5.2 kg of ethyl acrylate, 2.9 kg of n-butyl acrylate, 3.1 kg of n-butyl methacrylate, 0.22 kg of monobutyl fumarate, and a 0.5% by mass aqueous solution of t-butyl hydroperoxide were separately injected under pressure from an inlet to start polymerization. The temperature in the container during the reaction was maintained at 55°C, and the reaction was performed until the polymerization conversion ratio reached 95%. To the resulting polymerization liquid, 20 kg of 0.3% by mass aqueous solution of sodium borate was added to solidify the polymer, and the polymer was dehydrated and dried to obtain an acrylic rubber A.

This acrylic rubber A had a copolymer composition of 45 parts by mass of the ethyl acrylate unit, 24 parts by mass of the n-butyl acrylate unit, 28 parts by mass of the n-butyl methacrylate unit, 1.5 parts by mass of the ethylene unit, and 1.5 parts by mass of the monobutyl fumarate unit. These respective monomer components were quantitatively determined using a nuclear magnetic resonance spectrum method.

### <Acrylic rubber B>

The same method as in the acrylic rubber A was performed to obtain an acrylic rubber B, except that n-butyl acrylate and monobutyl fumarate were not used, and monomers to be used were changed to 7.6 kg of ethyl acrylate, 3.6 kg of n-butyl methacrylate, 0.9 kg of ethylene, and 0.28 kg of monobutyl maleate.

This acrylic rubber B had a copolymer composition of 67 parts by mass of the ethyl acrylate unit, 30 parts by mass of the n-butyl methacrylate unit, 1.6 parts by mass of the ethylene unit, and 1.5 parts by mass of the monobutyl maleate unit.

### <Acrylic rubber C> (comparative example)

The same method as in the acrylic rubber A was performed to obtain an acrylic rubber C, except that n-butyl acrylate and monobutyl fumarate were not used, and monomers to be used were changed to 8.3 kg of ethyl acrylate, 2.9 kg of n-butyl methacrylate, 0.9 kg of ethylene, and 0.28 kg of monobutyl maleate.

This acrylic rubber C had a copolymer composition of 72% by mass of the ethyl acrylate unit, 25% by mass of the n-butyl methacrylate unit, 1.7% by mass of the ethylene unit, and 1.6% by mass of the monobutyl maleate unit, with respect to the whole monomer units (100% by mass).

### <Acrylic rubber D>

The same method as in the acrylic rubber A was performed to obtain an acrylic rubber D, except that n-butyl acrylate and monobutyl fumarate were not used, and monomers to be used were changed to 7.2 kg of ethyl acrylate, 4.0 kg of n-butyl methacrylate, 0.9 kg of ethylene, and 0.28 kg of monobutyl maleate.

This acrylic rubber D had a copolymer composition of 63% by mass of the ethyl acrylate unit, 34% by mass of the n-butyl methacrylate unit, 1.5% by mass of the ethylene unit, and 1.4% by mass of the monobutyl maleate unit, with respect to the whole monomer units (100% by mass).

### <Acrylic rubber E>

The same method as in the acrylic rubber A was performed to obtain an acrylic rubber E, except that n-butyl methacrylate and monobutyl fumarate were not used, and monomers to be used were changed to 7.8 kg of ethyl acrylate, 3.4 kg of n-butyl acrylate, 0.9 kg of ethylene, and 0.28 kg of monobutyl maleate.

This acrylic rubber E had a copolymer composition of 68% by mass of the ethyl acrylate unit, 29% by mass of the n-butyl acrylate unit, 1.6% by mass of the ethylene unit, and 1.5% by mass of the monobutyl maleate unit, with respect to the whole monomer units (100% by mass).

### <Acrylic rubber F>

The same method as in the acrylic rubber A was performed to obtain an acrylic rubber F, except that n-butyl methacrylate and monobutyl fumarate were not used, and monomers to be used were changed to 6.2 kg of ethyl acrylate, 3.9 kg of n-butyl acrylate, 1.1 kg of methyl methacrylate, 0.9 kg of ethylene, and 0.28 kg of monobutyl maleate.

This acrylic rubber F had a copolymer composition of 53% by mass of the ethyl acrylate unit, 34% by mass of the n-butyl acrylate unit, 1.6% by mass of the ethylene unit, 9.7% by mass of the methyl methacrylate unit, and 1.6% by mass of the monobutyl maleate unit, with respect to the whole monomer units (100% by mass).

### <Acrylic rubber G>

The same method as in the acrylic rubber A was performed to obtain an acrylic rubber G, except that n-butyl methacrylate and monobutyl fumarate were not used, and monomers to be used were changed to 6.2 kg of ethyl acrylate, 3.9 kg of n-butyl acrylate, 1.1 kg of methyl methacrylate, 0.9 kg of ethylene, and 0.40 kg of monobutyl maleate.

This acrylic rubber G had a copolymer composition of 53% by mass of the ethyl acrylate unit, 34% by mass of the n-butyl acrylate unit, 1.5% by mass of the ethylene unit, 9.6% by mass of the methyl methacrylate unit, and 2.2% by mass of the monobutyl maleate unit, with respect to the whole monomer units (100% by mass).

### <Acrylic rubber H>

The same method as in the acrylic rubber A was performed to obtain an acrylic rubber H, except that the amounts of monomers to be used were changed to 7.7 kg of ethyl acrylate, 2.4 kg of n-butyl acrylate, 1.1 kg of n-butyl methacrylate, 0.9 kg of ethylene, and 0.28 kg of monobutyl fumarate.

This acrylic rubber H had a copolymer composition of 68% by mass of the ethyl acrylate unit, 19% by mass of the n-butyl acrylate unit, 1.5% by mass of the ethylene unit, 9.7% by mass of the n-butyl methacrylate unit, and 1.5% by mass of the monobutyl fumarate unit, with respect to the whole monomer units (100% by mass).

The monomer compositions of the acrylic rubbers A to H are shown in Table 1 below. Note that, in Table 1, values converted when the alkyl acrylate unit is regarded as 100 parts by mass.

**[Table 1]**

| | | | Example | | | | Comparative Example | | | |
|---|---|---|---|---|---|---|---|---|---|---|
| Acrylic rubber | | | A | B | C | D | E | F | G | H |
| Monomer composition | Ethyl acrylate unit | Parts by mass | 65 | 100 | 100 | 100 | 70 | 61 | 61 | 78 |
| | n-Butyl acrylate unit | | 35 | - | - | - | 30 | 39 | 39 | 22 |
| | Methyl methacrylate unit | | - | - | - | - | - | 11 | 11 | - |
| | n-Butyl methacrylate unit | | 41 | 45 | 35 | 55 | - | - | - | 11 |
| | Ethylene unit | | 2.2 | 2.4 | 2.4 | 2.4 | 1.6 | 1.8 | 1.7 | 1.7 |
| | Monobutyl maleate unit | | - | 2.2 | 2.2 | 2.2 | 1.5 | 1.8 | 2.5 | - |
| | Monobutyl fumarate unit | | 2.2 | - | - | - | - | - | - | 1.7 |

The above-described acrylic rubbers A to H and other materials were kneaded using an 8-inch open roll at blending in Table 2, thereby obtaining acrylic rubber compositions of Examples 1, 2 and 3 and Comparative Examples 1 to 4 and example 3.

These acrylic rubber compositions (non-crosslinked) were molded into a thickness of 2 mm and subjected to a heating treatment with a hot press at 170°C × 20 minutes to obtain primary crosslinked products, and then the primary crosslinked products were subjected to a heating treatment with hot air (geer oven) at 170°C × 4 hours, thereby obtaining crosslinked products of the acrylic rubber compositions.

Reagents shown in Table 2 are as follows.
- Carbon black: SEAST SO manufactured by TOKAI CARBON CO., LTD.
- Lubricant A: Liquid paraffin (manufactured by KANEDA Co., Ltd.)
- Lubricant B: Stearic acid (manufactured by NOF CORPORATION)
- Lubricant C: Stearylamine (FARMIN 80 manufactured by Kao Corporation)
- Anti-aging agent: 4,4'-Bis(α,α-dimethylbenzyl) diphenylamine (NAUGARD 445 manufactured by Addivant USA LLC)
- Crosslinking agent: Hexamethylendiamine carbamate (Diak#1 manufactured by DuPont)
- Crosslinking accelerator: XLA-60 manufactured by LANXESS
   Heat resistance, oil resistance, and cold resistance of the obtained crosslinked products of the acrylic rubber compositions were evaluated under the following conditions.

### (Heat resistance test)

The crosslinked product of the acrylic rubber composition was subjected to a thermal treatment at a test temperature of 190°C for a test time of 504 hours according to JIS K6257:2017. The elongation at break of each of the crosslinked products before and after the thermal treatment was measured using No. 3 dumbbell according to JIS K6251:2017. The elongation at break after the thermal treatment and a change ratio in the elongation at break before and after the thermal treatment were obtained. As the value of the change ratio is close to 100, there is no change before and after the thermal treatment, and it indicates that heat resistance is high.

### (Oil resistance test)

Regarding Examples 1 to 4, ΔV (volume change ratio) and ΔW (mass change ratio) of the crosslinked products were also measured according to JIS K6258:2016.

### (Cold resistance test)

Regarding Examples 1 to 4, T₁₀₀ of the crosslinked products were measured according to JIS K6261:2006. Herein, T₁₀₀ is a temperature at which the modulus (specific modulus) with respect to the modulus of the crosslinked product at 23°C becomes 100 times.

**[Table 2]**

| | | | | Example | | | | Comparative Example | | | |
|---|---|---|---|---|---|---|---|---|---|---|---|
| | | | | 1 | 2 | 3 | 4 | 1 | 2 | 3 | 4 |
| Type of acrylic rubber | | | | A | B | C | D | E | F | G | H |
| Blending (parts by mass) | Acrylic rubber | | | 100 | 100 | 100 | 100 | 100 | 100 | 100 | 100 |
| | Carbon black: SEAST SO | | | 45 | 50 | 50 | 50 | 50 | 50 | 45 | 50 |
| | Lubricant A: liquid paraffin | | | 1 | 1 | 1 | 1 | 1 | 1 | 1 | 1 |
| | Lubricant B: stearic acid | | | 1 | 1 | 1 | 1 | 1 | 1 | 1 | 1 |
| | Lubricant C: stearylamine | | | 0.3 | 0.3 | 0.3 | 0.3 | 0.3 | 0.3 | 0.3 | 0.3 |
| | Anti-aging agent: NAUGARD 445 | | | 1.0 | 1.0 | 1 | 1 | 1.0 | 1.0 | 1.0 | 1.0 |
| | Crosslinking agent: Diak#1 | | | 0.4 | 0.4 | 0.4 | 0.4 | 0.4 | 0.4 | 0.4 | 0.4 |
| | Crosslinking accelerator: XLA-60 | | | 0.8 | 0.8 | 0.8 | 0.8 | 0.8 | 0.8 | 0.8 | 0.8 |
| Evaluation results | Heat resistance | Elongation at break after thermal treatment | [%] | 194 | 226 | 201 | 247 | 42 | 106 | 123 | 33 |
| | | Change ratio in elongation at break | [%] | 60 | 65 | 59 | 71 | 14 | 27 | 34 | 10 |
| | Oil resistance | ΔV | [%] | 56 | 35 | 31 | 42 | - | - | - | - |
| | | ΔW | [%] | 42 | 25 | 21 | 29 | - | - | - | - |
| | Cold resistance | T₁₀₀ | [°C] | -25 | -16 | -19 | -15 | - | - | - | - |

As shown in Table 2, the crosslinked products of the acrylic rubber compositions of Examples exhibited excellent heat resistance as compared to the crosslinked products of the acrylic rubber compositions of Comparative Examples.

## Claims

1. An acrylic rubber comprising 100 parts by mass of an alkyl acrylate, 37 parts by mass or more of an alkyl methacrylate and 0.5 parts by mass or more of a crosslinking monomer having a carboxy group, as monomer units;
wherein the alkyl methacrylate is n-butyl methacrylate; and
wherein the alkyl acrylate is one or more selected from the group consisting of ethyl acrylate and n-butyl acrylate.

2. The acrylic rubber according to claim 1, further comprising ethylene as the monomer units.

3. The acrylic rubber according to claim 1 or 2, wherein a content of the alkyl methacrylate is 37 parts by mass or more and 60 parts by mass or less.

4. An acrylic rubber composition comprising the acrylic rubber according to any one of claims 1 to 3.

5. The acrylic rubber composition according to claim 4, further comprising one or more selected from the group consisting of a crosslinking agent and a crosslinking accelerator.

6. The acrylic rubber composition according to claim 4 or 5, further comprising one or more selected from the group consisting of a filler, a reinforcing agent, a plasticizer, a lubricant, an anti-aging agent, a stabilizer, and a silane coupling agent.

7. A crosslinked product of the acrylic rubber composition according to any one of claims 4 to 6.

8. A hose member comprising the crosslinked product according to claim 7.

9. A sealing member comprising the crosslinked product according to claim 7.

10. A vibration-proof rubber member comprising the crosslinked product according to claim 7.

## Patentansprüche

1. Acrylkautschuk, umfassend 100 Masseteile eines Alkylacrylats, 37 Masseteile oder mehr eines Alkylmethacrylats und 0,5 Masseteile oder mehr eines vernetzenden Monomers mit einer Carboxygruppe als Monomereinheiten;
wobei das Alkylmethacrylat n-Butylmethacrylat ist; und
wobei das Alkylacrylat eines oder mehrere, asugewählt aus der Gruppe bestehend aus Ethylacrylat und n-Butylacrylat ist.

2. Acrylkautschuk gemäß Anspruch 1, ferner umfassend Ethylen als die Monomereinheiten.

3. Acrylkautschuk gemäß Anspruch 1 oder 2, wobei ein Gehalt an Alkylmethacrylat 37 Masseteile oder mehr und 60 Masseteile oder weniger beträgt.

4. Acrylkautschukzusammensetzung, die den Acrylkautschuk gemäß mindestens einem der Ansprüche 1 bis 3 umfasst.

5. Acrylkautschukzusammensetzung gemäß Anspruch 4, ferner umfassend einen oder mehrere, ausgewählt aus der Gruppe bestehend aus einem Vernetzungsmittel und einem Vernetzungsbeschleuniger.

6. Acrylkautschukzusammensetzung gemäß Anspruch 4 oder 5, ferner umfassend einen oder mehrere, ausgewählt aus der Gruppe bestehend aus einem Füllstoff, einem Verstärkungsmittel, einem Weichmacher, einem Schmiermittel, einem Alterungsschutzmittel, einem Stabilisator und einem Silankupplungsmittel.

7. Vernetztes Produkt der Acrylkautschukzusammensetzung gemäß mindestens einem der Ansprüche 4 bis 6.

8. Schlauchelement, das das vernetzte Produkt gemäß Anspruch 7 umfasst.

9. Dichtungselement, das das vernetzte Produkt gemäß Anspruch 7 umfasst.

10. Vibrationsfestes Kautschukelement, das das vernetzte Produkt gemäß Anspruch 7 umfasst.

## Revendications

1. Caoutchouc acrylique comprenant 100 parties en masse d'un acrylate d'alkyle, 37 parties en masse ou plus d'un méthacrylate d'alkyle et 0,5 partie en masse ou plus d'un monomère réticulant ayant un groupe carboxy, sous forme d'unités monomères ;
dans lequel le méthacrylate d'alkyle est du méthacrylate de n-butyle ; et
dans lequel l'acrylate d'alkyle est un ou plusieurs sélectionnés parmi le groupe constitué d'acrylate d'éthyle et d'acrylate de n-butyle.

2. Caoutchouc acrylique selon la revendication 1, comprenant en outre de l'éthylène comme unités monomères.

3. Caoutchouc acrylique selon la revendication 1 ou la revendication 2, dans lequel une teneur du méthacrylate d'alkyle est de 37 parties en masse ou plus et de 60 parties en masse ou moins.

4. Composition de caoutchouc acrylique comprenant le caoutchouc acrylique selon l'une quelconque des revendications 1 à 3.

5. Composition de caoutchouc acrylique selon la revendication 4, comprenant en outre un ou plusieurs sélectionnés parmi le groupe constitué d'un agent réticulant et d'un accélérateur réticulant.

6. Composition de caoutchouc acrylique selon la revendication 4 ou la revendication 5, comprenant en outre un ou plusieurs sélectionnés parmi le groupe constitué d'une charge, d'un agent de renforcement, d'un plastifiant, d'un lubrifiant, d'un agent anti-âge, d'un stabilisateur et d'un agent de couplage au silane.

7. Produit réticulé de la composition de caoutchouc acrylique selon l'une quelconque des revendications 4 à 6.

8. Élément de tuyau comprenant le produit réticulé selon la revendication 7.

9. Élément d'étanchéité comprenant le produit réticulé selon la revendication 7.

10. Élément de caoutchouc résistant aux vibrations comprenant le produit réticulé selon la revendication 7.
